# EUROPEAN PATENT APPLICATION

(11) **EP 4 703 041 A1**
(43) Date of publication of application: **04.03.2026**
(21) Application number: 25199396.0
(22) Date of filing: 01.09.2025
(51) Int. Cl.: B03D 3/00, B01F 25/40, C02F 1/52

(54) **PROCESS, APPARATUS AND SYSTEM FOR FLOCCULATING SOLIDS FRACTIONS OF A SOLID-LIQUID MIXTURE**

(30) Priority: 02.09.2024 NL 2038557
(71) Applicant: NuReCo B.V., 6708 HP Wageningen (NL)
(72) Inventor: BRIGLIA, Maria, 6708 HP Wageningen (NL); MIDDELDORP, Olmo Luigi Antoon Briglia, 6708 HP Wageningen (NL); MIDDELDORP, Petrus Johannes Maria, 6708 HP Wageningen (NL)
(74) Representative: V.O.

(57) **Abstract**

A process for flocculating one or more solids fractions of a solid-liquid mixture, for example sludge or graywater, including:
- feeding a flocculating agent (F) to the solid-liquid mixture (M); and
- conducting the solid-liquid mixture and flocculating agent (F) along a flocculation path (P), in particular during a corresponding flocculation period, wherein the flocculation path (P) is defined by a duct structure (10) that includes at least a first meander duct section (10a) and a second meander duct section (10b), the first meander duct section (10a) being located above the second meander duct section (10b), the first meander duct section (10a) and second meander duct section (10b) being interconnected via a respective vertically oriented bend section (12a).

## Description

The invention relates to a process (i.e. a method) for flocculating solids fractions of a solid-liquid mixture. Also, the invention relates to an apparatus for flocculating solids fractions of a solid-liquid mixture, and a respective flocculation system.

Flocculation processes are known in various variants. Flocculation generally concerns introducing a flocculating agent (also known as a 'clarifying agent', 'flocculant', 'agglomeration agent') into a solid-liquid mixture, wherein the flocculating agent generates flocs from the solid suspended fraction of the mixture. After flocculation, the resulting flocculated solid-liquid mixture can be treated or further processed, e.g. to filter out the flocs (i.e. to separate the solid aggregated fraction from the liquid) using suitable filter means. General information can e.g. be found on https://en.wikipedia.org/wiki/Flocculation, providing the definition: flocculation is a process of contact and adhesion whereby the particles of a dispersion form larger-size clusters.

For example, the separation of organic matter from water phase (e.g. a sludge) is done by adding a specific flocculant (in particular polyelectrolyte) to the sludge and mixing it with either a static or dynamic mixer. This would facilitate the binding between the organic matter and the flocculant and form flocs prior mechanical separation. However, existing mixing devices are mostly static and harsh. Though they mix well, they produce too small flocs that are still present in the water phase after the mechanical separation. The most encountered biases of known processes are high usage of flocculant, small size flocs, instability, and need of pretreatment (e.g. with coagulants) resulting in high process costs and CO₂ footprint as well.

For example, WO9315026A1 describes a method for treating effluent such as untreated biological effluent, where sludge solids are settled out from a liquid sludge fraction. The sludge solids pass to a digester where the sludge solids undergo anaerobic digestion to produce digested sludge and bio-gas. The digested sludge is dewatered and the liquid sludge fraction and the liquid component of the dewatered digested sludge is passed to an activated sludge tank. The resulting activated sludge solids are then concentrated by settlement, dewatered, and flocculated under alkaline and acidic conditions. The resultant acidic activated sludge solids are neutralized before and passed to a mixing and drying apparatus where the solids are mixed with the digested sludge and dried using the bio-gas as a fuel. According to an embodiment, the flocculating and further dewatering preferably comprises the addition of a suitable chemical such as polyelectrolyte followed by belt filtration or equivalent.

WO8401313A1 discloses a process for the recovery of solid materials from dilute dispersion of finely divided solid material, such as animal wastes, sewage, asbestos and coal, comprising adding to the dispersion an agglomeration agent capable of inducing flocculation of the particles, mixing the agglomeration agent and the dispersion, conditioning the mixture to allow flocculation to take place, and passing the flocculated mixture, substantially without shearing the flocculated particles, to a rapped or vibrated sieve bend and recovering the flocculated particles from the overflow of the sieve bend.

US2019030500 provides an apparatus for flocculation of solids fractions of a solid-liquid mixture, in particular sludge or gray water, having a mixing sector configured for conducting the solid-liquid mixture having a first mixing unit having a static mixer adapted for admixing a first flocculation agent and having a second mixing unit fluidly connected in series with the first mixing unit having a dynamic mixer adapted for admixing a second flocculation agent into the mixing sector.

Further, various types of flocculation systems are known, from the prior art, for example including static or dynamic mixing units for mixing flocculating agent with a substance (a solid-liquid mixture) that is to be flocculated. The website www.jains.com e.g. discloses a relatively bulky HDPE pipe flocculator, including a plurality of elongated tube sections that are interconnected by end sections that extend at an angle.

WO2016038996 discloses a seawater desalination system having a flocculate growth device which comprises a meandering pipeline configured of straight pipes each having a given length and, connected thereto, bent pipes bent at a given angle and which causes, within the pipeline, flocculates to grow in seawater that has been stirred and mixed with the flocculants by static mixers.

KR100938116 discloses a wastewater disposal apparatus including a septic tank, a wastewater supply line, a chemical mixing line, a sludge discharge line, a chemical supply tank, a waste supply pump, a neutralizing agent supply pump, and a coagulant supply pump.

A disadvantages of known flocculation processes is that flocculation efficiency is relatively low, which can require abundant use of flocculant agent and/or which can lead to a discharged mixture that includes relatively high amounts of unused flocculant agent. Also, known flocculation processes require relatively large amounts of processing space, e.g. a respective flocculation apparatus having a relatively large footprint.

The present invention aims to provide an improved process for flocculating solids fractions of a solid-liquid mixture. In particular, the invention aims to provide a process that solves or alleviates the above-described problems of known processes. An object of the invention is to provide a flocculation process wherein high flocculation efficiency can be obtained, in particular such that a relatively small amount of flocculant agent is required to achieve floc formation of the solid fraction and/or which can lead to a discharged mixture that includes only a small -remaining-amount of unused flocculant agent (or substantially no flocculation agent at all). Also, an object is to provide a flocculation processes require relatively a relatively small amount of processing space.

According to an aspect of the invention this is achieved by the features of claim 1.

Advantageously, there is provided a process for flocculating one or more solids fractions of a solid-liquid mixture, for example sludge or graywater, including:
- feeding a flocculating agent to the solid-liquid mixture; and
- conducting the solid-liquid mixture and flocculating agent along a flocculation path, in particular during a respective/corresponding flocculation period;
wherein the flocculation path substantially consists of an array of straight horizontal path sections fluidly interconnected (in particular in series) by one or more intermediate bend sections, wherein the array of straight horizontal path sections includes at least one pair of subsequent horizontal path sections that are fluidly connected by a vertically oriented bend section, for example such that they overlap each other viewed in a vertical direction (i.e. in a top view).

In particuar, the flocculation path is defined by a duct structure that includes at least a first meander duct section and a second meander duct section, the first meander duct section being located above the second meander duct section, the first meander duct section and second meander duct section being interconnected via a respective vertically oriented bend section, wherein each meander duct section provides at least three subsequent horizontal path sections of the flocculation path, the at least three subsequent horizontal path sections being fluidly connected by intermediate horizontally oriented bend sections such that the at least three subsequent horizontal path sections overlap each other viewed in a horizontal direction, wherein the duct structure preferably includes five meander duct sections, located above each other, at different vertical levels, wherein each meander duct section preferably provides at least four subsequent horizontal path sections, wherein preferably a length of each straight horizontal path section of the flocculation path is at least 1 meter, for example a length in the range of 1 - 10 meter, in particular a length (L) in the range of 2- 5 meter. Further, it is preferred that the duct structure includes at least 20 horizontal duct sections (resulting in a respective relatively high number of intermediate horizontal and vertical bend sections, in particular at least 19 bend sections). It has been found that in this way, surprisingly, significantly improved flocculation results can be achieved. As a result of such improved flocculation, less flocculating agent is required. Also, discharged solid-liquid mixture can include only little of unused flocculating agent. In addition, the present process requires a relatively small footprint, i.e., the process can be carried out withing a relatively small overall processing space (compared to known flocculation processes), which provides significant advantages during installation of a respective flocculation apparatus in a process environment. Moreover, it has been found that the present method can lead to a significant (at least 50%) reduction of use of flocculant. In particular, the resulting compact innovative (3-dimensional) duct structure provides at least two (and preferably much more, for example at least five) substantially horizontal oriented meander duct sections that are located at mutually different vertical levels (being interconnected by a respective vertically oriented bend section) which can lead to these various advantages.

According to an embodiment, the solid-liquid mixture can be selected from the group comprising: sludge, greywater, sewage, piggery wastes, cattle effluent wastes, effluent from dairy industry, liquid biomass mixtures, micro-organism (in liquid, e.g. water) and microalgae (in liquid, e.g. water). It will be clear that the or each flocculating agent can include various types of agents. In particular, the flocculating agent used is specifically capable of flocculating the solid-liquid mixture that is being processed. For example, the flocculating agent can be selected from the group consisting of: a polyelectrolyte, a carbonate and/or calcium salt, at least one acrylamide-free polymer, and an anionic or cationic polymer.

As an example, the process can be applied for settling out sludge solids from a liquid sludge fraction (using a suitable flocculant, e.g. polyelectrolyte, to induce flocculation).

Without wishing to be bound to theory, it is believed that the improved flocculation results can be explained in that the process provides a number of subsequent flocculation periods during passage through the numerous respective horizontal path sections of the various meander sections, wherein the solid-liquid mixture remains substantially undisturbed by external mechanical influences. During such a horizontal passage, gentle flocculating agent induced flocculation can occur, wherein solid fraction particles can gently agglomerate and start forming flocs. In particular, during each horizontal passage no dedicated mixing is applied to the mixture. Each intermediate vertical bend passage can provide a turning action (a local rotation, acceleration) on the generated flocs (e.g. turning passing flocs upside-down in the mixture), during a relatively short time period, after which the gentle flocculation process (in a horizontal path section) can continue. Also, each vertical path bend can provide a local, swift gentle mixing or redistribution of the mixture. In particular, a local floc turning action, in a bend path section, can provide gentle floc repositioning in the solid-liquid mixture, more particularly such that respective floc acceleration does not lead to floc disintegration (i.e. falling-apart). On the other hand, the respective local floc turning action can provide local redistribution with respect to surrounding matter, enhancing chances that nearby fresh solid fraction becomes available to interact with (and agglomerate with) the repositioned (e.g. turned and/or temporarily accelerated) floc. Further, the mixing/turning effect can be significantly improved by the numerous horizontal bend sections that are provided by each of the meander duct sections of the duct structure. In particular, a relatively high number of both horizontal bend sections and vertical bend sections, defined by the meandering duct structure, can provide significantly improved processing results.

According to a preferred embodiment, solid particles in the solid-liquid mixture are flocculated by the flocculating agent, wherein resulting flocs are reoriented or turned along a horizontal axis during transport through at least one of said bend sections of the flocculation path, for example turned upside-down, wherein preferably the resulting flocs are substantially not reoriented or turned during transport through each of said straight horizontal sections of the flocculation path.

According to a preferred embodiment, the flocculation path (as defined by the duct structure) includes at least two vertically oriented bend sections that overlap each other viewed in the vertical direction. In this way, a more compact configuration can be achieved, in particular a process wherein at least three different vertical levels are available to provide horizontally oriented flocculation paths, fluidly interconnected by said vertically oriented bend sections.

Preferably, a virtual center line of each vertically oriented bend section of the flocculation path (defined by the duct structure) extends along a respective virtual vertical plane. In this way, the vertical bend can be oriented straight upwards or straight downwards (in particular without deviating in a horizontal direction). This can provide a compact configuration, and good floc reorientating action.

Furthermore, good results can be achieved via one or more of the following features:
- the flocculation path includes at least one pair of elongated parallel path sections that extend at mutually different vertical levels and that are fluidly interconnected by a U-shaped (i.e. 180 degrees) bend section;
   in particular, a flow direction through one of the pair of elongated parallel path sections can be opposite to a flow direction through the other of the respective pair of elongated parallel path sections;
- each of the intermediate bend sections is a U-shaped section of the flocculation path;
- the flocculation path has a constant cross-section, viewed along a flow direction through the path;
- the flocculation path is a continuous uninterrupted path, defined by one or more inner surfaces of one or more tubular elements;
- the flocculation path has at least one pair of neighboring parallel path sections, wherein a closest-distance between each pair of neighboring parallel path sections is about the same as or smaller than a transversal width or diameter of the respective flocculation path; and
- the array of straight horizontal path sections includes a plurality of parallel flocculation path sections, each having a length of at least 1 meter, for example a length in the range of 1 - 10 meter, in particular a length in the range of 2- 5 meter.

For example, according to an embodiment, the array of straight horizontal path sections can include a plurality of first flocculation path sections located at a first vertical level and a plurality of second flocculation path sections located at a second vertical level, the second vertical level being below the first vertical level.

Preferably, according to an embodiment, the solid-liquid mixture and flocculating agent flow through the flocculation path at a predetermined flow rate such that a respective residence time (e.g. an overall flocculation period) in the flocculation path is at least 30 seconds, preferably at least 60 seconds, more preferably at least 90 seconds, and preferably a residence time of at most 600 seconds, for example at most 300 seconds.

It follows that flocculation is preferably achieved relatively swiftly by the present process. Herein, the flocculation path can in particular extend between an inlet and an outlet of a respective flocculation apparatus, and said residence time can be the time that the mixture requires to flow from the inlet to (and out of) the outlet.

According to an embodiment, the solid-liquid mixture and flocculating agent maintain a laminar flow during transport through part of the straight horizontal path sections, e.g. at an initial (upstream) section of a respective flow path. For example, the flow path can include a mixture of laminar (e.g. horizontal) flow path sections and turbulent flow path sections (in particular horizontal and vertical bend sections). In particular, the laminar flow can become at least partly turbulent during transport since the flocculation can lead to physical and/or chemical changes (e.g. viscosity can drop, the liquid phase becomes clearer, aggregated organic matter -if any-can form larger flakes, etc.) in the flocculation path. Such changes can slowly break a laminar flow mode into a turbulent mode.

In this way, gentle flocculation can occur, in particular during passage through a respective horizontal path section.

Preferably, a cumulative residence time of the solid-liquid mixture and flocculating agent during their transport through the straight horizontal path sections is larger than a cumulative residence time of the solid-liquid mixture and flocculating agent during their transport through the intermediate one or more bend sections by a factor of at least four, and preferably by a factor of at least five or six. In this way, a major part of the flocculation path can be available to provide gentle flocculation, and only a remaining part that consists of all intermediate bend sections is available to provide local path bending (and e.g. respective floc reorientations).

Further, an aspect of the present invention provides an improved apparatus for flocculating solids fractions of a solid-liquid mixture, more particularly sludge or graywater. In particular, the apparatus can be for carrying out (i.e. for use in) a process according to the invention.

Good results can be achieved in case the apparatus includes a flocculation unit having an entry port for receiving a solid-liquid mixture and a flocculating agent, and a discharge port for discharging flocculated solid-liquid mixture, wherein the entry port and discharge port are fluidly connected by a fluid duct structure that defines a flocculation path, wherein the flocculation path substantially consists of (i.e. includes) an array of straight horizontal path sections fluidly interconnected by one or more intermediate bend sections,
wherein the flocculation path is defined by a duct structure that includes at least a first meander duct section and a second meander duct section, the first meander duct section being located above the second meander duct section, the first meander duct section and second meander duct section being interconnected via a respective vertically oriented bend section,
wherein each meander duct section provides at least three subsequent horizontal path sections of the flocculation path, the at least three subsequent horizontal path sections being fluidly connected by intermediate horizontally oriented bend sections such that the at least three subsequent horizontal path sections overlap each other viewed in a horizontal direction,
wherein the duct structure preferably includes five meander duct sections, located above each other, at different vertical levels,
wherein each meander duct section preferably provides at least four subsequent horizontal path sections.

In this way, above-mentioned advantages can be achieved. It further follows that the array of straight horizontal path sections (defined by the duct structure) includes at least one pair of subsequent horizontal path sections that are fluidly connected by a vertically oriented bend section, e.g. such that they overlap each other viewed in top view.

Preferred embodiments that provide additional advantages and improved results include one or more of the following features:
- the fluid duct structure substantially consists of a plurality of straight fluid duct elements, interconnected in series via a plurality of duct bend elements, for example U-bend duct elements, wherein the fluid duct structure preferably has a support structure, for example a frame, for supporting the duct elements;
- a cumulative length of straight horizontal path sections, measured centrally along a respective flocculation path flow direction, is at least five times a cumulative length of the one or more intermediate bend sections measured centrally there-through along a respective flocculation path flow direction, and preferably at least six times or at least seven times that cumulative length; and
- the entry port is positioned at a first vertical level, wherein the discharge port is located at a second vertical level, wherein the second vertical level is below the first vertical level (in this way, fluid flow can at least partly be gravity induced flow).

Further, an aspect of the invention provides an improved system for flocculating solids fractions of a solid-liquid mixture.

The system preferably includes:
- at least one solid-liquid mixture supply, in particular a container or reservoir, holding a solid-liquid mixture, e.g. sludge or graywater;
- at least one flocculating agent supply, holding a flocculating agent;
   and
- an apparatus according to the invention;
wherein the entry port of the flocculation unit is fluidly connected to the solid-liquid mixture supply and the flocculating agent supply, for receiving the solid-liquid mixture and a flocculating agent therefrom.

The invention will be further explained with reference to the drawings, in which non-limiting exemplary embodiments of the invention are described. Therein shows:
Figure 1 schematically an exemplary embodiment of a system according to the invention;
Figure 2 a perspective cut-away view of an exemplary embodiment of a flocculation apparatus of the system shown in Fig. 1;
Figure 3 shows a perspective side view of a flocculation unit of the apparatus shown in Fig. 2;
Figure 4 shows a perspective front view of the flocculation unit shown in Fig. 3;
Figure 5 shows a side view of the flocculation unit shown in Fig. 3;
Figure 6 shows a top view of the flocculation unit shown in Fig. 3;
Figure 7 shows a front view of the flocculation unit shown in Fig. 3;
Figure 8 shows a rear view of the flocculation unit shown in Fig. 3;
   and
Figure 9 shows a cross-sectional view over line IX-IX of Fig. 5.

In this application similar or corresponding features are denoted by similar or corresponding reference signs.

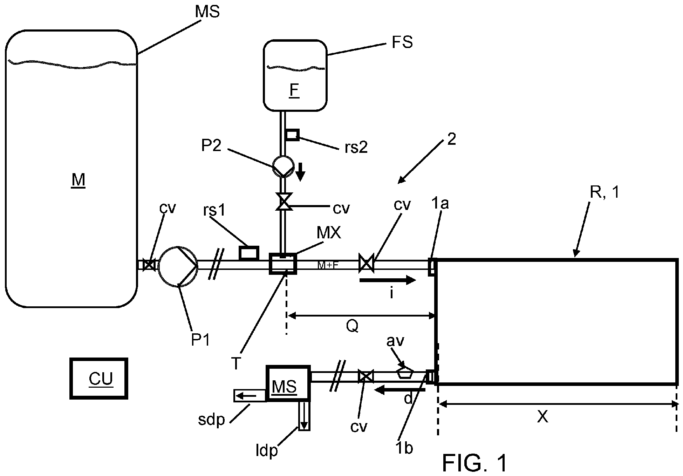

Figure 1 schematically depicts an example a system for flocculating solids fractions of a solid-liquid mixture.

The system includes:
- at least one solid-liquid mixture supply MS (one being shown), in particular a container or reservoir, holding a solid-liquid mixture M, e.g. sludge or graywater;
- at least one flocculating agent supply FS (one being shown), in particular a flocculating agent container or flocculating agent reservoir, holding a flocculating agent F; and
- an apparatus R for flocculating solids fractions of a solid-liquid mixture M.

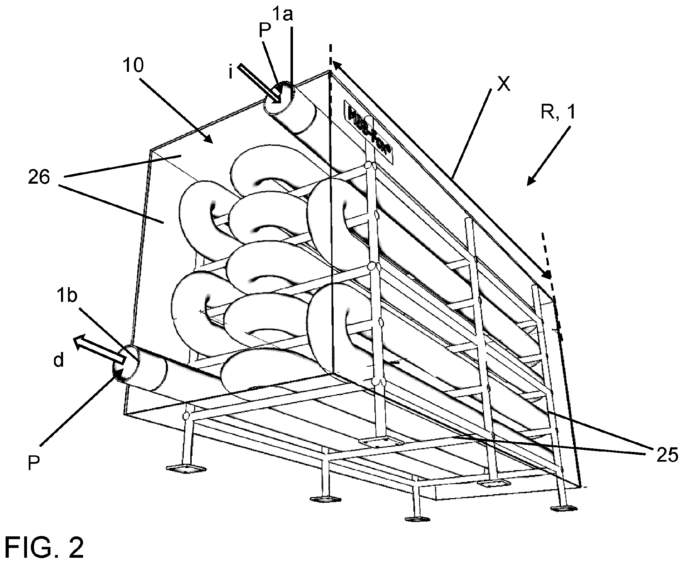

A non-limiting embodiment of the flocculation apparatus R is depicted in Figures 2-9. The flocculation apparatus R preferably includes a flocculation unit 1 having an entry port 1a for receiving solid-liquid mixture M (supplied by the solid-liquid mixture supplier MS), the mixture M containing flocculating agent F (supplied by the flocculating agent supplier FS). The flocculation unit 1 further includes a discharge port 1b for discharging flocculated solid-liquid mixture M. The entry port 1a and discharge port 1b are fluidly interconnected by a fluid duct structure 10 that defines (i.e. encloses) a flocculation path P (see Figures 2, 4, 9). In particular, the apparatus R can be called a "pipe flocculator", including an elongated pipe-structure, the interior space of the respective pipe wall(s) forming a flow conducting space for guiding the solid-liquid mixture M along the respective flocculation path P. Solid-liquid mixture entry flow (into the flocculation path P) is indicated by arrows i in the drawings, and solid-liquid mixture discharge flow (out of the flocculation path P) is indicated by arrows d.

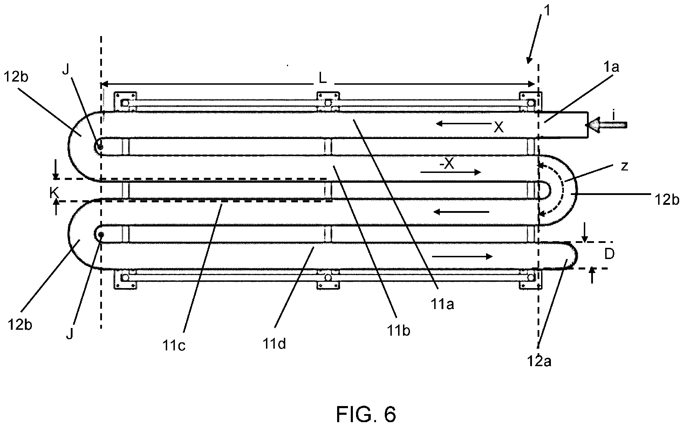

The flocculation path P (defined/enclosed by the fluid duct structure 10) includes an array of straight horizontal path sections 11 fluidly interconnected by one or more intermediate bend sections 12. As will be explained in more detail below, advantageously, the array of straight horizontal path sections 11 includes at least one pair of subsequent horizontal path sections 11 that are fluidly connected by a vertically oriented bend section 12a. For example, the two subsequent horizontal path sections 11 overlap each other viewed in top view (see Figure 6). Preferably, the two subsequent horizontal path sections 11 that are fluidly connected by a vertically oriented bend section 12a, entirely overlap each other viewed in top view.

As follows from Figure 1, in the exemplary system embodiment, the entry port 1a of the flocculation unit 1 is fluidly connected to the solid-liquid mixture supply MS (and the flocculating agent supply FS), e.g. via a suitable duct structure 2, for receiving the solid-liquid mixture M (and flocculating agent F) therefrom.

For example, the system can include flow control means cv, P, CU, rs for controlling flow (e.g. flow rate) of the solid-liquid mixture M. Such flow control means can e.g. include one or more flow control valves cv and/or flow inducing pumping devices P1, P2 (as part of or integrated with an afore-mentioned duct structure 2), for controlling (and/or effecting) flow of solid-liquid mixture M to (and through) the flocculation unit 1, as will be appreciated by the skilled person. Optionally, the system can include a central flow control unit CU, which can be connected to said control valves cv and/or flow inducing pumping devices P1, P2 (if any), for example via wired or wireless control signal links (not shown) for automatically regulating respective flow control. According to a non-limiting embodiment, solid-liquid mixture flow toward the flocculator apparatus R can at least partly be induced by gravity. It will be appreciated that the system can also include one or more sensor means, e.g. one or more (first) flow rate monitors rs1, for detecting instantaneous flow rate of solid-liquid mixture to (or out of) the flocculation unit 1, and preferably also a (second) flow rate monitor rs2 for detecting instantaneous flow rate of flocculant F out of the respective flocculant supplier FS. A said central flow control unit CU can be configured to use respective detected instantaneous flow rates in the controlling of the process. Further, the flow control means can optionally be configured to automatically set a predetermined ratio of supplied flocculating agent and solid-liquid mixture (and e.g. adjust a flow rate of supplied flocculating agent F in case the flow rate of supplied solid-liquid mixture M is adjusted), as will be clear to the skilled person. The central flow control unit CU can e.g. be or include suitable control unit hardware, an electronic control circuit, a computer, processor or the-like, and can e.g. be configured to carry out computer program instructions for setting and adjusting flow rates of solid-liquid mixture M and flocculant F, for example (additionally) based on predetermined process control information (e.g. respective mixing ratios and/or flow rates) that may e.g. be stored in a memory of the control unit CU, as will be clear to the skilled person.

Optionally, the system can include a pressure regulator av, for example an air valve av, in particular at or downstream of (e.g just after, near) the discharge port 1b (see Fig. 1). The pressure regulator av can be configured to provide a constant air pressure inside the fluid duct structure 10 (as will be clear to the skilled person). For example, the pressure regulator av can be configured to automatically close a respective air release port in case air pressure in the duct structure is at or below a predetermined air pressure value, and to automatically open the respective air release port in case the air pressure in the duct structure is above a predetermined air pressure value (allowing air to escape from the interior of the fluid duct structure 10 to an environment of the fluid duct structure 10). Optionally, the predetermined air pressure value is atmospheric pressure. It is preferred that the predetermined air pressure value is adjustable, be manually and/or under control of the central control unit CU.

Further, optionally, the system can be provided with a thermoregulatory device (not shown) to regulate temperature of the solid-liquid mixture M. Such a temperature regulator can e.g. include a fluid heater device or the-like, and also e.g. a temperature sensor for detecting/monitoring temperature of the solid-liquid mixture M that is fed into the duct structure 10, as will be clear to the skilled person. It is preferred that a temperature of the supplied solid-liquid mixture can be automatically controlled (and adjusted if required) by the thermoregulatory device, for example under control of the central control unit CU, for example to provide an optimal flocculation temperature of the solid-liquid mixture M. As follows from the drawing, in particular, the flocculating agent supply FS can be located downstream of the liquid-mixture supply MS and upstream with respect to the entry port 1a of the flocculation apparatus R.

Optionally, the system can include a local mixing device MX, upstream of the entry port 1a of the flocculation apparatus R, for locally mixing flocculant F, discharged by the flocculant supplier FS, into solid-liquid mixture M that is discharged by the solid-liquid mixture supplier MS. The local mixing device MX can e.g. be a static mixing device or dynamic mixing device, e.g. a mechanical mixer unit, as will be appreciated by the skilled person.

Preferably, a distance Q between a flocculating agent entry point T (where flocculating agent F is introduced into the solid-liquid mixture flow that is fed from the solid-liquid mixture supply MS towards the flocculating apparatus R, e.g. an entry point T defined by a said local mixing device MX) on one hand and the entry port 1a of flocculating apparatus R on the other hand (the distance Q being measured along or in parallel with a respective flow path of the solid-liquid mixture M) can be located near the flocculation apparatus R . Said distance Q can e.g. be smaller than a horizontal length X of the flocculation apparatus R, for example a distance Q in the rage of 1-5 meters, e.g. about 1 meter or 2 meter. Preferably, the distance Q is less than 1 meter.

Optionally, the system can include one or more separators MS (e.g. one or more mechanical separator devices), located downstream of the discharge port 1b of the flocculation apparatus R, for receiving the processed solid-liquid mixture M and for separating generated flocs from liquid. A separator MS (known per se) can e.g. include one or more liquid discharge ports ldp for discharging liquid and one or more solid discharge ports sdp for discharging separated solid material (i.e. the flocs). In a non-limiting embodiment, a said downstream separator MS can e.g. be a centrifuge, a press-type separator, a sieve belt press, a screw press and/or the-like.

It has been found that surprisingly good flocculation results are achieved (by the flocculation apparatus R) in case the array of straight horizontal path sections 11 includes at least one pair of subsequent horizontal path sections 11 that are fluidly connected by a vertically oriented bend section 12a, e.g. such that they overlap each other viewed in top view. This is depicted in more detail in the non-limiting example of Figures 2-9.

Besides, referring to the drawings, the fluid duct structure 10 includes at least a first (horizontally extending) meander duct section 10a and a second (horizontally extending) meander duct section 10b, the first meander duct section 10a being located above the second meander duct section 10b. Significantly improved results can be achieved in case the fluid duct structure 10 includes more than two (horizonally orientated) meander duct sections, for example at least three or four such meander duct sections. The example includes five (horizonally orientated) meander duct sections 10a, 10b, 10c, 10d, 10e (located above-each other, at different vertical levels).

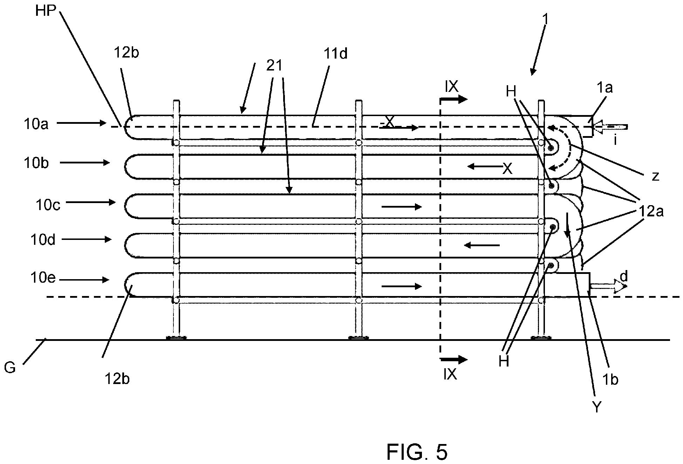

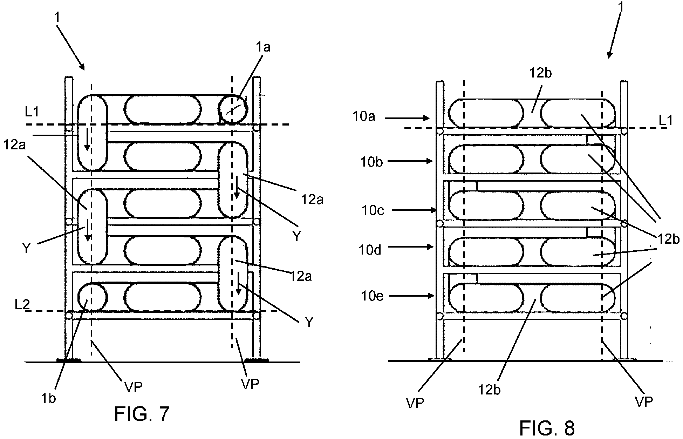

For example, the plurality of different vertical levels of horizontal duct sections provide a cascade duct structure, wherein each vertically oriented bend section 12a can provide a local 'waterfall-type' level drop for the solid-liquid mixture M to fall or rush downwardly to a lower level (contributing to local turbulence), in particular in case the units entry port 1a is located at a higher level than a vertical level of the respective discharge port 1b. A respective, vertically downwards directed flow direction (of solid-liquid mixture M flowing through vertically positioned bend sections 12a) is indicated by arrows Y in Figures 5, 7.

In particular, each (horizontally oriented) meander duct section 10a-10e can define a respective meander path section of the flocculation path P.

Each meander duct section 10a-10e preferably provides at least three horizontal (parallel) path sections of the flocculation path P, more preferably at least four horizontal path sections 11a, 11b, 11c, 11d, as in the example (see figure 6). For example, each meander duct section 10a-10e can include an even number of respective horizontal path sections. Further, each meander duct section 10a-10e preferably includes a plurality of horizontally oriented bend sections 12b (located at the same vertical level) for fluidly interconnecting respective horizontal path sections of the respective meander path.

For example, the resulting duct structure 10 can be configured to define (at least) 20 horizontal path sections 11 (see the drawings), and for example at least 19 respective bend sections, in particular in case each of the (at least) five meander duct sections defines (at least) four horizontal horizontal path sections 11.

For example, according to an embodiment, a virtual center line of each horizontally oriented bend section 12b (which center line extends longitudinally along the respective the flocculation path P) preferably extends along a respective virtual horizontal plane HP (one being indicated in Figure 5). For example, in case of U-shaped or semi-circular horizontal bend sections 12b (as depicted in the drawings), the respective virtual center line can be a semi-circle, a respective axis of rotation being a virtual vertical axis (indicated by J in Fig. 6). It should be observed that such U-shaped bend sections 12b can also be shaped differently, e.g. including (short) straight sections between two 90-degrees bend sections.

Further, each pair of subsequent meander duct sections 10a-10e of the duct structure 10 are in particular interconnected via a respective (single) vertically oriented bend section 12a (see Figure 5). It follows that in case the fluid duct structure has a number N of horizontally extending duct levels (such as the meander duct structures), it preferably has a number of N-1 respective vertically oriented bend sections 12a for fluidly interconnecting those horizontally extending duct levels.

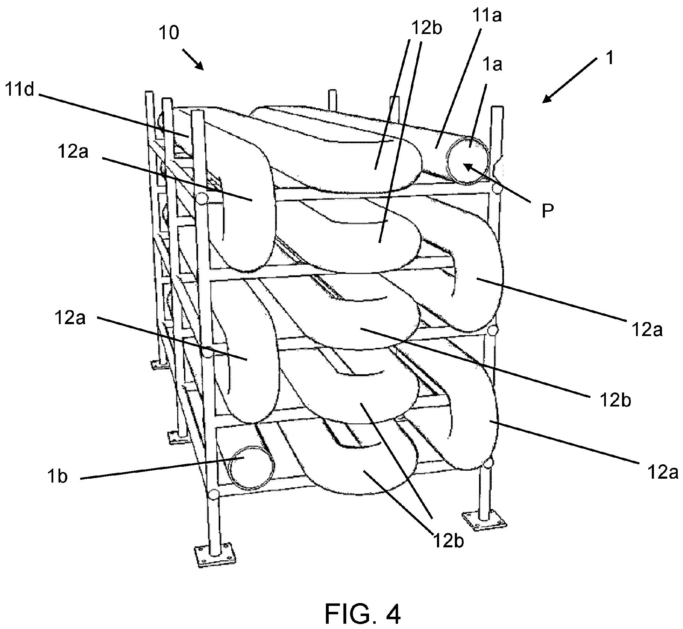

In the present example, all vertically oriented bend sections 12a of the flocculation path P are located at the same lateral side of the respective flocculation unit 1 (see Figures 4, 7), whereas an opposite lateral side of the flocculation unit 1 only includes horizontal bend sections 12b (see Fig.8).

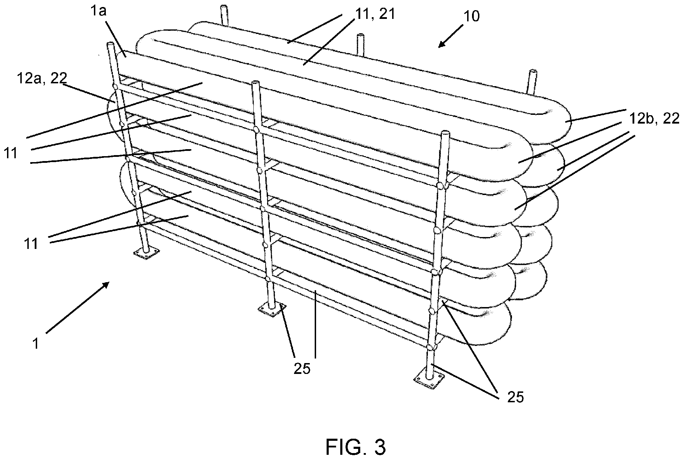

Further, it is preferred that the fluid duct structure 10 substantially consists of a plurality of straight fluid (tubular) duct elements 21, interconnected in series via a plurality of duct bend elements 22 (see Figure 3), preferably U-bend (i.e. 180 degrees) duct elements 22 (each of which can e.g. be constructed from two 90-degrees bend duct elements joined together).

For example, the fluid duct structure 10 can be made of a plurality of plastic duct elements 21, 22, e.g. made of PVC (polyvinylchloride), PVC-U (non-plasticized Polyvinyl Chloride), HDPE (high-density polyethylene), steel duct elements, and/or a different material, depending e.g. on the type of solid-liquid mixture that is to be processed. In case of processing sludge, use of PVC duct elements 21, 22 provides good results and can provide a cost-friendly solution.

Optionally, the various duct elements 21, 22 of the flocculation unit 1 can be configured to be interconnected or coupled (joined) to each other with or without using adhesive, to form the respective flocculation path P. For example, butt ends of respective elements 21, 22 can be interlinked via integrated socket sections, and can e.g. clamp onto each other via friction.

Preferably, the overall length of the horizontal part of the flocculation path P, defined by the flocculation unit 1, is significantly larger than the cumulative length of the flow path sections through all the bends 12a, 12b. For example, a cumulative length of straight horizontal path sections 11, measured centrally along a respective flocculation path flow direction, can be at least five times a cumulative length of all intermediate bend sections 12a, 12b (each bend path being measured centrally through the bend -along a respective flocculation path direction- as e.g. indicated by double arrow center line z in Fig. 6 for a vertical bend section 12a), and preferably at least six times or at least seven times that cumulative length.

Preferably, as follows from the drawings (see Figure 7), the entry port 1a is positioned at a first vertical level L1, wherein the discharge port 1b is located at a second vertical level L2, wherein the second vertical level L2 is below the first vertical level L1.

The fluid duct structure 10 preferably has a support structure 25, for example a frame, for supporting the duct elements 21, 22 (and e.g. supporting the respective flocculation unit on or above a supporting floor or structure, e.g. a horizontal ground level G or the-like). The support structure 25 can include e.g. interconnected horizontal and vertical support elements, and/or be configured differently.

Further, optionally, the flocculation unit 1 can include or be surrounded by a cover, e.g. one or more external side walls 26, for shielding the flocculation unit 1 from an environment.

Operation of the apparatus R (and respective system) can be as follows, and can in particular provide an improved process for flocculating one or more solids fractions of a solid-liquid mixture, for example sludge or graywater. The process includes:
- feeding a flocculating agent F (e.g. supplied by the flocculant supplier FS) to the solid-liquid mixture M (e.g. supplied by the solid-liquid mixture MS); and
- conducting the solid-liquid mixture M and flocculating agent F along a flocculation path P (provided by the duct elements 21, 22 of the flocculation unit 1), in particular during a flocculation period.

The flocculation path P substantially consists of an array of straight horizontal path sections 11 fluidly interconnected (in series) respective intermediate bend sections 12. The array of straight horizontal path sections 11 includes at least one pair (and preferably a plurality of such pairs) of subsequent horizontal path sections that are fluidly connected by a vertically oriented bend section 12a such that (in this example) they overlap each other viewed in a vertical direction. In particular, the flocculation path P is defined by the afore-mentioned duct structure 10, including said meander duct sections (each providing horizontally oriented bend sections 12b).

Moreover, the solid-liquid mixture M preferably follows a flocculation path P that includes at least two vertically oriented bend sections 12a that overlap each other viewed in the vertical direction (see Figures 5 and 7). A virtual center line z (see Fig. 5) of each vertically oriented bend section 12a (which center line z extends longitudinally along the respective the flocculation path P) preferably extends along a respective virtual vertical plane VP (indicated in Figures 7-9), i.e. in parallel with that plane VP. For example, in case of U-shaped or semi-circular bend sections 12a (depicted in the drawings), said virtual center line z can be a semi-circle, a respective axis of rotation being a virtual horizontal axis (indicated by H in Fig. 5). It should be observed that such U-shaped bend sections 12a can also be shaped differently, e.g. including (short) straight sections between two 90-degrees bend sections.

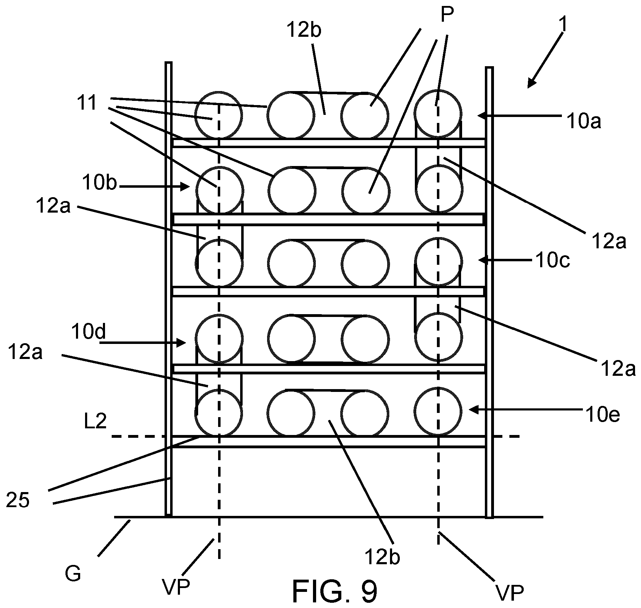

According to a further embodiment, the vertically oriented bend sections 12a are only located in transversally outer sections (rows) of the respective path (see Figure 9), in particular interconnecting lateral sections of subsequent duct (meander) levels 10a-10e.

As follows from the above the flocculation path P preferably includes at least one array of at least three subsequent horizontal path sections (e.g. providing a respective horizontally oriented meander section 10a-10e) that are fluidly connected by intermediate horizontally oriented bend sections 12b such that they overlap each other viewed in a horizontal direction.

Also, it is preferred that the solid-liquid mixture M (including flocculating agent F) is conducted along a flocculation path P that includes pairs of elongated parallel path sections 11a, 11b that extend at mutually different vertical levels and that are fluidly interconnected by respective U-shaped (i.e. 180 degrees) bend sections 12. A flow direction X through one of the pair of elongated parallel path sections 11a, 11b is in particular opposite to a flow direction -X through the other of the respective pair of elongated parallel path sections 11a, 11b, when viewed in a top view (see Figure 5).

As follows from the above, each of the intermediate bend sections 12 is preferably a U-shaped section of the flocculation path.

In particular, during operation, solid particles in the solid-liquid mixture M are flocculated by the flocculating agent F, wherein resulting flocs can be reoriented/turned along a horizontal axis during transport through at least one of said vertical bend sections 12a of the flocculation path, for example turned upside-down, wherein preferably the resulting flocs are substantially not reoriented/turned during transport through each of said straight horizontal sections 11 of the flocculation path. Besides, floc turning (or mixing) can be achieved in each of the many horizontal bend sections 12b of the flocculation path.

Good results can be achieved in case the flocculation path P has a constant cross-section (e.g. diameter D), viewed along a flow direction through the path P. For example, a diameter of the path (in case of using piping or ducts having circular cross-section) can be larger than 10 cm, for example about 12.5 cm, or a diameter D (see Figure 6) of at least 25 cm, at least 50 cm, or another diameter, depending e.g. on a solid-liquid mixture flow rate (m³/h) that is desired. For example, in a non-limiting embodiment, a flow rate higher than 5 m³ /h, e.g. a rate in the range of about 8 to 10 m³/h, of solid-liquid mixture can be applied, in particular using a duct unit 1 having a diameter D of the respective duct elements of 12.5 cm.

It is preferred that process is carried out using a continuous uninterrupted flocculation path (the path P being defined by one or more inner surfaces of one or more tubular elements 21, 22 of the flocculation unit 1).

It is also preferred that the process is carried out using a flocculation path P wherein the path at least one pair of neighboring parallel path sections 11a, 11b, having a closest-distance K (see Figure 6) that is about the same as or smaller than a transversal width or diameter D of the respective flocculation path. Thus, the process can be carried out using a relatively small footprint, whereas bend sections 12a, 12b having e.g. relatively small bend radii can be applied to interconnect subsequent horizontal path sections.

According to a further embodiment, good results are achieved in case the array of straight horizontal path sections 11 includes a plurality of parallel flocculation path sections, each e.g. having a length L (see Figure 6) of at least 1 meter, for example a length in the range of 1 - 10 meter, in particular a length in the range of 2- 5 meter (i.e. said length being the length L of each respective straight horizontal path section 11).

Further, as follows from the above, the array of straight horizontal path sections 11 preferably includes a plurality of first flocculation path sections 11a located at a first vertical level and a plurality of second flocculation path sections 11b located at a second vertical level, the second vertical level being below the first vertical level.

It has been found that the flocculation process can provide good result in case the solid-liquid mixture and flocculating agent F flow through the flocculation path P at a predetermined flow rate such that a respective residence time (flocculation period) in the flocculation path P is at least 30 seconds, preferably at least 60 seconds, more preferably at least 90 seconds, and preferably a residence time of at most 600 seconds, for example at most 300 seconds.

As is mentioned before, optionally, the solid-liquid mixture M (including flocculating agent F) maintains a laminar flow during transport through at least part of the straight horizontal path sections 11 (e.g. through an initial part). It is preferred that during transport through the flocculation apparatus R, the flow acquires a gentle turbulence (in particular during passage through the horizontal and vertical bend sections). For example, the respective flocculation process can lead to changing physical and chemical conditions of the mixture M (including flocculating agent), in particular due to the formation of (big and bigger) flocks/flakes, whereas for example free flocculating agent concentration diminishes (because free flocculating agent binds suspended solids by lowering a respective viscosity level). Also, the respective liquid phase generally becomes clearer. Such changes can cause the initially laminar flow to become turbulent.

Further, during operation, the solid-liquid mixture M can be fed into the flocculation unit 1 such that the interior space of the duct structure 10 of the unit 1 (bounded by the inner surfaces of the perspective duct sections, i.e. tubular elements 21, 22) is not entirely filled with the solid-liquid mixture M but also contains (environment) air. Furthermore, according to an embodiment, the transport of solid-liquid mixture M through the duct structure 10 of the unit 1 is preferably carried out under atmospheric pressure (i.e. without actively pressuring the solid-liquid mixture M).

According to a further embodiment, in particular in case the entry port 1a of the flocculation unit 1 is located above the discharge port 1b, flow of solid-liquid mixture M from the entry port 1a to the discharge port 1b is mainly or only induced by gravity, so that substantially no active pumping is required to achieve that solid-liquid flow. Alternatively, solid-liquid mixture M and respective flocculant F can be continuously pumped via the inlet 1a into the unit 1 ( where it is mixed) and via the outlet 1b, e.g. to the separator MS. In the latter case, a respective pump P1 (or respective pumps P1, P2) is (are) preferably operated such that a respective pumping energy for the solid-liquid mixture transport is sufficient to move and mix the mixture M, F through the unit 1 and discharge the resulting flocculated mixture via the discharge port 1b, e.g. towards/into a downstream separator MS (if any).

A cumulative residence time of the solid-liquid mixture M and flocculating agent F during their transport through the straight horizontal path sections 11 can is preferably significantly larger than a cumulative residence time of the solid-liquid mixture and flocculating agent F during their transport through the intermediate one or more bend sections by a factor of at least four, and preferably by a factor of at least five or six.

It has been found that in this way, optimum flocculation, producing surprisingly relatively large flocs, can be achieved. In particular, it has been found that the present process, apparatus R and respective system can maximally facilitate binding between solid parts of the solid-liquid mixture (e.g. organic matter in case of sludge) and the flocculant. According to an embodiment, the apparatus R can simulate a cascade-mode dynamic mixing that can allow a complete saturation of flocculant F with the solid fraction (e.g. organic matter) present in solid-liquid mixture M (e.g. sludge) and facilitate relatively big floc formation. For example, this cascade mode is the result of the entry port 1a that is placed at/from the top of the apparatus R, wherein gravity G can be used to avoid any accumulation of flakes in the flocculation path, contributing to the mixing, and saving energy. In case of processing sludge as solid-liquid mixture M, it has been found that the present process and apparatus R can also improve a subsequent separation processes (e.g. a subsequent filtering step by a separator MS), if any, resulting in a much lighter/clear water phase and a highly dewatered sludge (up to 40% D.M. content) and in particular without pretreatment with coagulants. This results in a significant reduction of process costs, of CO₂ footprint, and a higher safety work environment.

In particular, it has been found that the horizontal bend sections can be just as important as the vertical ones regarding the mixing properties of the apparatus. For example, each bend section can have a length of at least 10 cm . For example, according to an embodiment, per each pair of meander arrays there can be at least three 180° degrees bending/turning sections, covering a bend length of at least 30cm (3x10cm), contributing to mixing properties of the apparatus (including turbulency of the flow). The resulting design can allow floc stabilization and growth by increasing contact moments between particles and flocculant molecule/s (horizontal path), which can be followed by slowly increasing turbulence flow and gravity speed (vertical path).

It is self-evident that the invention is not limited to the above-described exemplary embodiments. Various modifications are possible within the framework of the invention as set forth in the appended claims.

For example, the invention can include using a single flocculating agent F or a plurality of (different) flocculating agents, as will be appreciated by the skilled person.

It will be clear that the or each flocculating agent F can include various types of agents. For example, the one or more flocculating agents can be selected from the group consisting of: a polyelectrolyte, a carbonate and/or calcium salt, at least one acrylamide-free polymer, an anionic or cationic polymer, Alum, aluminium chlorohydrate, aluminium sulfate, calcium oxide, calcium hydroxide, iron(II) sulfate (ferrous sulfate), iron(III) chloride (ferric chloride), polyacrylamide, polyDADMAC, sodium aluminate , sodium silicate, Chitosan, Isinglass, Moringa oleifera seeds (Horseradish tree) Gelatin, Strychnos potatorum seeds (Nirmali nut tree), Guar gum, Alginates (brown seaweed extracts), and Long-chain polymer flocculants (e.g. modified polyacrylamides).

Further, it will be appreciated that a solid fraction to be flocculated can include or consist of particles that are finer than 0.1 µm, for example particles that remain continuously in motion in water due to electrostatic charge (e.g. negatively or positively charged particles). In case the solid fraction includes negatively charged particles it is preferred that the flocculating agent is selected such that the flocculating agent can neutralize the electrostatic charge. In particular, the flocculation process can involve agglomerating (collecting together) of the particles under the influence of Van der Waals forces. Generally, the resulting larger and heavier particles (consisting the agglomerated fine particles) of are called flocs.

For example, the flocculating agent can include positively charged molecules, e.g. multivalent cations (e.g. aluminium, iron, calcium or magnesium). Such positively charged molecules can interact with a negatively charged solid fraction (particles and/or molecules) to reduce the barriers to aggregation.

According to an embodiment, the flocculating agent F can be supplied to the solid-liquid mixture M in a liquid form or via a carrier liquid, for example in a suspension or liquid mixture (the liquid preferably being water), or differently, as will be clear to the skilled person.

According to an embodiment, the liquid that is used (i.e. as the liquid of the solid-liquid mixture M) is water.

Further, a or each said bend section 12a, 12b of the flocculation path can be a smooth curved bend section, for example extending along a virtual circle, or it can be a differently shaped bend section, e.g. an angular bend.

Furthermore, preferably, a said semi-circular (180 degree) bend section 12a, 12b (or U-bend) can e.g. be constructed from two tubular 90⁰ bend sections (i.e. quarter-circular), joined together, as will be clear to the skilled person. In other words: a said U-bend duct element 22 can be constructed from two 90⁰ bend duct elements, wherein the resulting (U-shaped) bend sections assembly can include a (short) straight path section between adjoining 90⁰ bends. A length of that straight path section can e.g. be at least about 10 cm.

Further, as follows from the above, it is preferred that the flocculation path (or respective duct structure) is provided by a plurality of horizontal duct arrays (i.e. meander sections) that are mutually parallel, a horizontal duct array being connected to a next horizontal duct array via an intermediate bend section that extends vertically (i.e. perpendicularly), each of the bend sections e.g. providing a vertical path section.

Further, the length of a bend section of the flocculation path P can e.g. be at least 0.1 meter.

## Claims

1. A process for flocculating one or more solids fractions of a solid-liquid mixture, for example sludge or graywater, including:
- feeding a flocculating agent (F) to the solid-liquid mixture (M); and
- conducting the solid-liquid mixture and flocculating agent (F) along a flocculation path (P), in particular during a flocculation period;
wherein the flocculation path (P) substantially consists of an array of straight horizontal path sections (11) fluidly interconnected by one or more intermediate bend sections (12a, 12b),
**characterised in that** the flocculation path (P) is defined by a duct structure (10) that includes at least a first meander duct section (10a) and a second meander duct section (10b), the first meander duct section (10a) being located above the second meander duct section (10b), the first meander duct section (10a) and second meander duct section (10b) being interconnected via a respective vertically oriented bend section (12a),
wherein each meander duct section (10a, 10b, 10c, 10d, 10e) provides at least three subsequent horizontal path sections (11) of the flocculation path (P), the at least three subsequent horizontal path sections (11) being fluidly connected by intermediate horizontally oriented bend sections (12b) such that the at least three subsequent horizontal path sections (11) overlap each other viewed in a horizontal direction,
wherein the duct structure (10) preferably includes five meander duct sections (10a, 10b, 10c, 10d, 10e), located above each other, at different vertical levels,
wherein each meander duct section (10a, 10b, 10c, 10d, 10e) preferably provides at least four subsequent horizontal path sections (11),
wherein preferably a length (L) of each straight horizontal path section (11) of the flocculation path (P) is at least 1 meter, for example a length (L) in the range of 1 - 10 meter, in particular a length (L) in the range of 2- 5 meter.

2. The process according to claim 1, wherein the flocculation path (P) includes at least two vertically oriented bend sections (12a) that overlap each other viewed in the vertical direction, wherein a virtual center line (z) of each vertically oriented bend section (12a) of the flocculation path preferably extends along a respective virtual vertical plane (VP).

3. The process according to any of the preceding claims, wherein solid particles in the solid-liquid mixture (M) are flocculated by the flocculating agent (F), wherein resulting flocs are reoriented or turned along a horizontal axis during transport through at least one of said bend sections (12) of the flocculation path, for example turned upside-down, wherein preferably the resulting flocs are substantially not reoriented during transport through each of said straight horizontal sections (11) of the flocculation path.

4. The process according to any of the preceding claims, wherein the flocculation path (P) has a constant cross-section, viewed along a flow direction through the path (P).

5. The process according to any of the preceding claims, wherein each meander duct section (10a, 10b, 10c, 10d, 10e) provides at least one pair of neighboring parallel path sections (11a, 11b) of the flocculation path (P), wherein a closest-distance (K) between each pair of neighboring parallel path sections (11a, 11b) is about the same as or smaller than a transversal width or diameter (D) of the respective flocculation path.

6. The process according to any of the preceding claims, wherein the solid-liquid mixture and flocculating agent (F) flow through the flocculation path (P) at a predetermined flow rate such that a respective residence time in the flocculation path (P) is at least 30 seconds, preferably at least 60 seconds, more preferably at least 90 seconds, and preferably a residence time of at most 600 seconds, for example at most 300 seconds.

7. The process according to any of the preceding claims, wherein the solid-liquid mixture and flocculating agent (F) maintain a laminar flow during transport through part of the straight horizontal path sections (11), wherein:
- the laminar flow becomes an at least partly turbulent flow during transport through another part of the straight horizontal path sections (11); and/or
- the flow acquires turbulence during passage through the horizontally oriented bend sections and the vertically oriented bend sections.

8. The process according to any of the preceding claims, wherein a cumulative residence time of the solid-liquid mixture (M) and flocculating agent (F) during their transport through the straight horizontal path sections (11) is larger than a cumulative residence time of the solid-liquid mixture and flocculating agent (F) during their transport through the intermediate one or more bend sections by a factor of at least four, and preferably by a factor of at least five or six.

9. An apparatus for flocculating solids fractions of a solid-liquid mixture, more particularly sludge or graywater, for example for carrying out a process according to any of the preceding claims, wherein the apparatus includes a flocculation unit (1) having an entry port (1a) for receiving a solid-liquid mixture (M) and a flocculating agent (F), and a discharge port (1b) for discharging flocculated solid-liquid mixture (M), wherein the entry port (1a) and discharge port (1b) are fluidly connected by a fluid duct structure (10) that defines a flocculation path (P), wherein the flocculation path (P) substantially consists of an array of straight horizontal path sections (11) fluidly interconnected by one or more intermediate bend sections (12a, 12b), **characterised in that** the flocculation path (P) is defined by a duct structure (10) that includes at least a first meander duct section (10a) and a second meander duct section (10b), the first meander duct section (10a) being located above the second meander duct section (10b), the first meander duct section (10a) and second meander duct section (10b) being interconnected via a respective vertically oriented bend section (12a), wherein each meander duct section (10a, 10b, 10c, 10d, 10e) provides at least three subsequent horizontal path sections (11) of the flocculation path (P), the at least three subsequent horizontal path sections (11) being fluidly connected by intermediate horizontally oriented bend sections (12b) such that the at least three subsequent horizontal path sections (11) overlap each other viewed in a horizontal direction,
wherein the duct structure (10) preferably includes five meander duct sections (10a, 10b, 10c, 10d, 10e), located above each other, at different vertical levels,
wherein each meander duct section (10a, 10b, 10c, 10d, 10e) preferably provides at least four subsequent horizontal path sections (11),
wherein preferably a length (L) of each straight horizontal path section (11) of the flocculation path (P) is at least 1 meter, for example a length (L) in the range of 1 - 10 meter, in particular a length (L) in the range of 2- 5 meter.

10. The apparatus according to claim 9, wherein the fluid duct structure (10) substantially consists of a plurality of straight fluid duct elements (21), interconnected in series via a plurality of duct bend elements (22), for example U-bend duct elements (22), wherein the fluid duct structure (10) has a support structure (25), for example a frame, for supporting the duct elements (21, 22), wherein the support structure (25) prefererably includes interconnected horizontal and vertical support elements.

11. The apparatus according to any of claims 9-10, wherein a cumulative length of straight horizontal path sections (11), measured centrally along a respective flocculation path flow direction, is at least five times a cumulative length of the one or more intermediate bend sections (12) measured centrally there-through along a respective flocculation path flow direction, and preferably at least six times or at least seven times that cumulative length.

12. The apparatus according to any of claims 9-11, wherein the duct structure (10) is configured to define at least 20 straight horizontal path sections (11) of the flocculation path (P).

13. The apparatus according to any of claims 9-12, wherein the entry port (1a) is positioned at a first vertical level (L1), wherein the discharge port (1b) is located at a second vertical level (L2), wherein the second vertical level (L2) is below the first vertical level (L1).

14. The apparatus according to any of claims 9-13, including a pressure regulator (av) for regulating pressure in the fluid duct structure (10), in particular such that transport of solid-liquid mixture (M) through the duct structure (10) can be carried out under atmospheric pressure.

15. System for flocculating solids fractions of a solid-liquid mixture, wherein the system includes:
- at least one solid-liquid mixture supply, in particular a container or reservoir, holding a solid-liquid mixture (M), e.g. sludge or graywater;
- at least one flocculating agent supply, holding a flocculating agent; and
- an apparatus according to any of claims 9-14;
wherein the entry port (1a) of the flocculation unit (1) is fluidly connected to the solid-liquid mixture supply and the flocculating agent supply, for receiving the solid-liquid mixture (M) and a flocculating agent (F) therefrom.
